# EUROPÄISCHE PATENTANMELDUNG

(11) **EP 3 789 815 A1**
(43) Veröffentlichungstag der Anmeldung: **10.03.2021**
(21) Anmeldenummer: 19195132.6
(22) Anmeldetag: 03.09.2019
(51) Int. Cl.: G02C 7/02, G02C 7/06, G02C 13/00

(54) **COMPUTERIMPLEMENTIERTES VERFAHREN ZUM ANPASSEN EINES BRILLENGLASES AN EINE BRILLENFASSUNG**

(71) Anmelder: Carl Zeiss Vision International GmbH, 73430 Aalen (DE)
(72) Erfinder: WIETSCHORKE, Helmut, 73433 Aalen (DE)
(74) Vertreter: PATERIS Patentanwälte PartmbB

(57) **Zusammenfassung**

Es wird ein Computerimplementiertes Verfahren zum Anpassen eines Brillenglases mit einer ersten Brillenglasfläche, einer zweiten Brillenglasfläche und wenigstens einer zu erzielenden dioptrischen Wirkung an eine Brillenfassung mit einer bestimmten Fassungsrandkurve zur Verfügung gestellt. In dem Verfahren wird eine auf einer ersten Brillenglasfläche gebildete Freiformfläche an die Fassungsrandkurve der Brillenfassung angepasst. Das Anpassen der Freiformfläche an die Fassungsrandkurve erfolgt, indem die Freiformfläche und die zweite Brillenglasfläche im Hinblick auf eine Minimierung des Unterschiedes zwischen der Freiformflächenrandkurve und der Fassungsrandkurve sowie im Hinblick auf das Erreichen der wenigstens einen mit dem Brillenglas zu erzielenden dioptrischen Wirkung optimiert werden.

## Beschreibung

Die vorliegende Erfindung betrifft ein Computerimplementiertes Verfahren zum Anpassen eines Brillenglases mit einer ersten Brillenglasfläche und einer zweiten Brillenglasfläche an eine Brillenfassung mit einer Fassungsrandkurve. Daneben betrifft die Erfindung ein Computerprogramm mit Instruktionen zum Durchführen des Verfahrens, ein nicht flüchtiges, computerlesbares Speichermedium mit dem darauf gespeicherten Computerprogramm und ein Datenverarbeitungssystem zum Anpassen eines Brillenglases mit einer ersten Brillenglasfläche und einer zweiten Brillenglasfläche an eine Brillenfassung mit einer Fassungsrandkurve.

Die Gestaltung eines Brillenglases ist nicht allein durch seine dioptrische Sollwirkung für den Brillengläser festgelegt, sondern weitere Faktoren wie beispielsweise die Gebrauchsbedingungen der Brille, die Form der Brillenfassung oder Vorgaben für die Durchbiegung der Brillenglasvorderfläche oder der Brillenglasrückfläche bspw. zum Erzielen einer Meniskenform des Brillenglases können die Geometrie des Brillenglases mit bestimmen. Die Form der Brillenglasfassung ist dabei nicht nur für eine korrekte Simulation der Lage der gefertigten Brillengläser vor dem Auge und eine Mittendickenoptimierung der Brillengläser von Bedeutung, sondern beeinflusst zusammen mit der Brillenglasvorderfläche auch die Ästhetik der fertig verglasten Brille. Ein gerandetes Brillenglas, dessen Berandung an seiner Vorderfläche sehr gut mit der Berandung der vom Brillenträger ausgewählten Brillenfassung übereinstimmt, wird dabei zu einer sehr ästhetischen Brille führen und ermöglicht ein problemloses Einschleifen des Brillenglases in die ausgewählte Fassung. Die für das Einsetzen eines Brillenglases in die Brillenfassung relevante Berandung der Brillenfassung kann durch eine dreidimensionale Fassungsrandkurve dargestellt werden, die üblicherweise entweder die Berandung der Fassung an ihrer Vorderseite oder den Verlauf der Fassungsmut der Brillenfassung repräsentiert. Diese dreidimensionale Fassungsrandkurve kann z.B. durch eine Anzahl dreidimensionaler Messpunkte auf dieser Kurve hinreichend gut repräsentiert sein. Die dreidimensionalen Messpunkte können bspw. mit einem geeigneten Messgerät erfasst werden.

Aus EP 1 656 581 B1 ist bekannt, die Durchmuschelung, also die Durchbiegung der Form der Brillenglasfassung, beim Auswählen einer geeigneten Brillenglasvorderfläche zu berücksichtigen, um neben einer Verbesserung der optischen Eigenschaften auch eine Verbesserung des Tragekomforts zu erzielen. Aus WO 2014/198894 A1 ist ein Verfahren zum Bestimmen einer ersten Brillenglasfläche bekannt, in dem die erste Brillenglasfläche derart ermittelt wird, dass sowohl die Differenz zwischen ihrer Krümmung und einer vorgegebenen Zielkrümmung als auch die Differenz zwischen ihrer Randkurve und einer vorgegebenen Fassungsrandkurve minimiert werden. Die zweite Brillenglasfläche kann dann mit Hilfe des in WO 2007/017766 A2 beschriebenen Verfahrens bestimmt werden. Aus EP 2 028 527 B1, EP 2 028 531 B1 und EP 2 028 533 A1 sind Verfahren bekannt, in denen die Krümmung der Brillenglasvorderfläche im Hinblick auf die Fassungsrandkurve geeignet ausgewählt wird. Anschließend kann dann die Brillenglasrückfläche im Hinblick auf ihre optischen Eigenschaften und im Hinblick auf die Geometrie der Brillenfassung optimiert werden, wie dies in EP 2 028 533 A1 beschrieben ist. Auf diese Weise lässt sich erreichen, dass das Brillenglas besser mit der Fassung abschließt. Jedoch erhält man dabei im Allgemeinen noch immer ein Brillenglas, bei dem sich der Rand der Brillenglasvorderfläche noch auffallend von der dreidimensionalen Fassungsrandkurve unterscheiden kann. Dies trifft vor allem auf Brillenfassungen zu, die sehr stark an die Gesichtsform angepasst sind. Derartige Brillenfassungen, und damit ihre Fassungsrandkurven, sind in horizontaler Richtung stärker durchgebogen als in vertikaler Richtung. Vor allem bei Brillengläsern mit sphärischer Vorderfläche weicht dadurch auch bei einer geeigneten Grundkurvenwahl der Rand der Brillenglasvorderfläche auffallend von der Fassungsrandkurve ab.

Aus WO 2018/193134 A2 ist ein Verfahren bekannt, mit dem eine Grundkurve für eine Brillenglasvorderfläche auf der Basis von Brillenfassungsdaten bestimmt werden kann. Das Bestimmen der Grundkurve kann dabei durch Anpassen einer Freiformfläche auf der Brillenglasvorderseite an die Fassungsrandkurve erfolgen. Daraus folgt jedoch nicht, dass dann mit der auf diese Weise ermittelten Grundkurve eine evtl. verwendete Freiformfläche mit dieser Grundkurve auch zu einer Brillenglasvorderfläche führt, die sehr gut mit dem Fassungsrand abschließt. D.h. eine optimale Grundkurve ist noch kein Garant dafür, dass der Rand der Brillenglasvorderfläche auch gut mit der Fassungsrandkurve übereinstimmt, Dies gilt auch dann, wenn die Brillenglasvorderfläche eine Freiformvorderfläche ist. Eine bloße Anpassung der Freiformfläche an die Fassungsrandkurve wird zudem ohne zusätzliche Maßnahmen i.a. nur zur Verschlechterung der dioptrischen Wirkungen führen.

Aufgabe der vorliegenden Erfindung ist es daher, ein computerimplementiertes Verfahren zum Anpassen eines Brillenglases mit einer ersten Brillenglasfläche und einer zweiten Brillenglasfläche an eine Brillenfassung mit einer Fassungsrandkurve zur Verfügung zu stellen, mit dem sich das Brillenglas besonders gut an die Fassungsrandkurve anpassen lässt, ohne die dioptrischen Wirkung des Brillenglases für den Nutzer merklich zu beeinträchtigen. Daneben bestehen Aufgaben der vorliegenden Erfindung darin, ein Computerprogramm, ein Datenverarbeitungssystem sowie ein nichtflüchtiges computerlesbares Speichermedium mit einem Computerprogramm zum Anpassen eines Brillenglases mit einer ersten Brillenglasfläche und einer zweiten Brillenglasfläche an eine Brillenfassung mit einer Fassungsrandkurve zur Verfügung zu stellen, mit denen sich ein Brillenglas besonders gut an die Fassungsrandkurve einer Brillenfassung anpassen lässt, ohne die dioptrischen Wirkung des Brillenglases für den Nutzer merklich zu beeinträchtigen.

Die genannten Aufgaben werden durch ein computerimplementiertes Verfahren nach Anspruch 1, ein Computerprogramm nach Anspruch 12, ein Datenverarbeitungssystem nach Anspruch 13 und ein nicht flüchtiges computerlesbares Speichermedium nach Anspruch 14 gelöst. Die abhängigen Ansprüche enthalten vorteilhafte Ausgestaltungen der Erfindung.

Erfindungsgemäß wird ein computerimplementiertes Verfahren zum Anpassen eines Brillenglases mit einer ersten Brillenglasfläche, einer zweiten Brillenglasfläche und wenigstens einer zu erzielenden dioptrischen Wirkung an eine Brillenfassung mit einer bestimmten Fassungsrandkurve zur Verfügung gestellt. In dem Verfahren wird eine auf einer ersten Brillenglasfläche gebildete Freiformfläche an die Fassungsrandkurve der Brillenfassung angepasst. Das Anpassen der Freiformfläche an die Fassungsrandkurve erfolgt, indem gleichzeitig die Freiformfläche und die zweite Brillenglasfläche im Hinblick auf eine Minimierung des Unterschiedes zwischen der Freiformflächenrandkurve und der Fassungsrandkurve sowie im Hinblick auf das Erreichen der wenigstens einen mit dem Brillenglas zu erzielenden dioptrischen Wirkung optimiert werden. Unter einer Optimierung, in der gleichzeitig die Freiformfläche und die zweite Brillenglasfläche optimiert werden, soll dabei eine Optimierung zu verstehen sein, in der sich die Freiformfläche und die zweite Brillenglasfläche während der Optimierung wechselseitig beeinflussen, so dass eine Änderung der Freiformfläche auch zu einer Änderung der zweiten Brillenglasfläche führt und umgekehrt, solange die Ziele der Optimierung nicht erreicht sind.

Mit Hilfe der Freiformflächentechnologie ist es möglich, eine Freiformfläche, insbesondere eine Freiformfläche auf der Brillenglasvorderfläche, zu berechnen, die im Bereich der entsprechenden Brillenglasfläche zu einer gut mit der Fassungsrandkurve übereinstimmenden Randkurve des Brillenglases führt. Dadurch, dass im Rahmen der Optimierung auch die zweite Brillenglasfläche, die typischerweise die Brillenglasrückfläche ist, optimiert wird, wird es möglich, zwei Optimierungsziele zu erreichen, nämlich einerseits eine Minimierung des Unterschiedes zwischen der Freiformflächenrandkurve und der Fassungsrandkurve und andererseits das Erreichen der wenigstens einen mit dem Brillenglas zu erzielenden dioptrischen Wirkung, insbesondere das Erreichen der wenigstens einen mit dem Brillenglas zu erzielenden dioptrischen Wirkung für verschiedene Blickrichtungen. Das erfindungsgemäße Verfahren ermöglicht daher eine genaue Anpassung des Brillenglases an die Fassungsrandkurve ohne dabei störende Abstriche bei der optischen Qualität des Brillenglases hinnehmen zu müssen, d.h. ohne dass die dioptrischen Wirkung des Brillenglases für den Nutzer merklich beeinträchtigt wird. Als für den Nutzer nicht merklich beeinträchtigend wird eine Einschränkung der dioptrischen Wirkung im Rahmen der Erfindung dann angesehen, wenn sie im Vergleich zu einem nicht an die Fassungsrandkurve angepassten Brillenglas lediglich im peripheren Bereich des Brillenglases vorliegt und vom Nutzers nicht oder kaum wahrgenommen werden kann.

Im Rahmen des erfindungsgemäßen Verfahrens ist es vorteilhaft, wenn die zweite Brillenglasfläche eine sphärische Brillenglasfläche, eine asphärische Brillenglasfläche, eine torische Brillenglasfläche oder eine atorische Brillenglasfläche ist. Mit Hilfe einer geeigneten, als Freiformfläche ausgebildeten Brillenglasvorderfläche lassen sich in Verbindung mit einer sphärischen, asphährischen, torischen oder atorischen zweiten Brillenglasfläche die dioptrischen Anforderungen besonders gut erfüllen, so dass der Brillenträger auch bei genauer Anpassung des Brillenglases an die Fassungsrandkurve keine störenden Einbußen bzgl. der Abbildungsqualität in der Peripherie erfährt. Das Verwenden einer sphärischen, asphährischen, torischen oder atorischen zweiten Brillenglasfläche bietet dabei den Vorteil, dass eine solche Fläche leicht zu fertigen ist und zudem eine relativ geringe Zentrierempfindlichkeit gegenüber der als Freiformfläche ausgebildeten Brillenglasvorderfläche aufweist.

Wenn die erste Brillenglasfläche die Brillenglasvorderfläche ist und die zweite Brillenglasfläche die Brillenglasrückfläche, können bewährte Verfahren zur Fertigung von individuellen Brillengläsern mit vorderseitiger Freiformfläche zur Anwendung kommen.

Im erfindungsgemäßen Verfahren kann das gleichzeitige Optimieren der Freiformfläche und der zweiten Brillenglasfläche iterativ erfolgen. Dabei wird in jedem Iterationsschritt zuerst die zweite Brillenglasfläche verändert und dann die Freiformfläche optimiert. Dadurch kann die Freiformfläche auf der ersten Brillenglasfläche jeweils in Bezug auf die aktuell vorliegende zweite Brillenglasfläche so optimiert werden, dass einerseits der Brillenträger in der Peripherie keine störenden Einbußen bzgl. der Abbildungsqualität in der Peripherie erfährt, und andererseits eine immer besser werdende Anpassung der Freiformflächenrandkurve an die Fassungsrandkurve erfolgt. Als Ausgangspunkt für die iterative Optimierung kann dabei ein Ausgangsbrillenglas mit einer eine vorgegebene Krümmung aufweisenden ersten Brillenglasfläche dienen. Ein Ausgangsbrillenglas mit einer eine vorgegebene Krümmung aufweisenden ersten Brillenglasfläche, die wie erwähnt insbesondere die Brillenglasvorderfläche sein kann, ermöglicht es, für das Ausgangsbrillenglas auf ein Brillenglas mit einer gängigen Grundkurve zurückzugreifen, so dass das Ausgangsbrillenglas rasch und einfach ermittelt werden kann. Die Krümmungsvorgabe kann dabei bereits im Hinblick auf die Fassungsrandkurve erfolgen, d.h. die Durchmuschelung der Fassung berücksichtigen. Insbesondere stark an die Kopfform angepasste Brillenfassungen wie etwa Brillenfassungen für Sportbrillen weisen eine hohe Durchmuschelung auf. Wird die Durchmuschelung bei solchen Brillen nicht beim Vorgeben der Krümmung für die erste Brillenglasfläche berücksichtigt, kann es passieren, dass die Optimierung eine hohe Anzahl an Iterationsschritten benötigt, um die Brillenglasvorderfläche an die Fassungsrandkurve anzupassen. Wenn die Durchmuschelung bei der Vorgabe der Krümmung der ersten Brillenglasfläche bereits berücksichtigt wird, kann daher der Optimierungsaufwand verringert werden.

Im Rahmen der Iteration ist es vorteilhaft, wenn im ersten Iterationsschritt zuerst die zweite Brillenglasfläche im Hinblick auf die wenigstens eine mit dem Brillenglas zu erzielende dioptrische Wirkung bestimmt wird, und danach die Freiformfläche im Hinblick auf das Erreichen der wenigstens einen mit dem Brillenglas zu erzielenden dioptrischen Wirkung durch das Brillenglas optimiert wird, insbesondere im Hinblick auf das Erreichen der wenigstens einen zu erzielenden dioptrischen Wirkung für viele Blickrichtungen beim Blick durch das Brillenglas. In beiden Iterationsschritten können dabei auch die Gebrauchsbedingungen berücksichtigt werden. Die wenigstens eine mit dem Brillenglas zu erzielende dioptrische Wirkung kann dabei insbesondere durch ein optisches Zieldesign vorgegeben sein, so dass die zur Optimierung von Brillengläsern gängigen Optimierungsverfahren Verwendung finden können. Die beschrieben Vorgehensweise ermöglicht es, für den ersten Iterationsschritt als Ausgangsfläche für die zweite Brillenglasfläche eine Fläche zu wählen, mit der in Verbindung mit einer ersten Brillenglasfläche, die einer Grundkurvenvorgabe entspricht, die wenigstens eine mit dem Brillenglas zu erzielende dioptrische Wirkung zunächst nur näherungsweise erreicht wird, bspw. nur in der optischen Mitte des Brillenglases, was das Bestimmen der zweiten Brillenglasfläche im ersten Iterationsschritt erleichtert. Das Erreichen der wenigstens einen mit dem Brillenglas zu erzielenden dioptrischen Wirkung kann dann anschließend durch geeignetes Anpassen der sowieso zu optimierenden ersten Brillenglasfläche realisiert werden.

Beim iterativen Optimieren ist es zudem vorteilhaft, wenn in jedem Iterationsschritt nach dem Optimieren der Freiformfläche jeweils der Wert eines Maßes für die Abweichung der nach der Optimierung der Freiformfläche vorliegenden Freiformflächenrandkurve von der Fassungsrandkurve ermittelt wird. Falls der ermittelte Wert des Maßes für die Abweichung einen vorgegebenen Wert unterschreitet oder die Änderung des Maßes einen vorgegebenen Wert unterschreitet, wird das Verfahren beendet. Andernfalls wird in einem nachfolgenden Iterationsschritt die zweite Brillenglasfläche geeignet verändert und anschließend die Freiformfläche erneut im Hinblick auf das Erreichen der wenigstens einen mit dem Brillenglas zu erzielenden dioptrischen Wirkung optimiert, wobei die zur Optimierung von Brillengläsern gängigen Optimierungsverfahren Verwendung finden können. Dadurch lässt sich ein Optimierungsverfahren realisieren, welches automatisiert das Brillenglas solange optimiert, bis die Abweichung des Unterschieds der Freiformflächenrandkurve von der Fassungsrandkurve einen vorgegebenen Grenzwert nicht mehr überschreitet oder die Änderung des Maßes einen vorgegebenen Wert unterschreitet, d. h. eine weitere merkbare Verkleinerung des Unterschiedes der Freiformflächenrandkurve von der Fassungsrandkurve nicht mehr möglich ist. Als Maß kann im einfachsten Fall die maximale in einer Differenzrandkurve vorliegende Pfeilhöhendifferenz herangezogen werden, wobei die Differenzrandkurve die Differenzen zwischen den Pfeilhöhen der Freiformflächenrandkurve und der Fassungsrandkurve an einander äquivalenten Punkten der beiden Randkurven repräsentiert. Alternativ kann als Maß die euklidische Norm der Beträge der in der Differenzrandkurve vorliegenden Pfeilhöhendifferenzen i.a. an ausgewählten Punkten der Freiformflächenrandkurve und der Fassungsrandkurve herangezogen werden. Weitere Maße wie bspw. die einfache Summe der Beträge der Pfeilhöhendifferenzen, das arithmetische Mittel der Beträge der Pfeilhöhendifferenzen oder der Median der Beträge der Pfeilhöhendifferenzen sind ebenfalls möglich. Die Pfeilhöhendifferenzen können sich dabei auch nur auf ausgewählte Punkte auf der Freiformflächenrandkurve und der Fassungsrandkurve beziehen.

In einer ersten Ausgestaltung der iterativen Optimierung basiert das Maß für die Abweichung auf der Differenzrandkurve. Das Verändern der zweiten Brillenglasfläche erfolgt in dieser Ausgestaltung auf der Basis der Differenzrandkurve. Die Differenzrandkurve kann dann zum Verändern der zweiten Brillenglasfläche herangezogen werden, so dass ein gezieltes Anpassen der zweiten Brillenglasfläche an die verbleibende Differenz zwischen den Pfeilhöhen der Freiformflächenrandkurve und den Pfeilhöhen der Fassungsrandkurve erfolgen kann. Das Verändern der zweiten Brillenglasfläche kann dabei insbesondere erfolgen, indem eine dritte Brillenglasfläche an die Differenzkurve angepasst wird und zumindest ein Abschnitt der dritten Brillenglasfläche der bisher vorliegenden zweiten Brillenglasfläche überlagert wird. Dabei ist es vorteilhaft, wenn die dritte Brillenglasfläche aus derselben Flächenfamilie, zu der auch die zweite Brillenglasfläche gehört, entnommen ist. Die dritte Brillenglasfläche ist dann eine sphärische oder torische Brillenglasfläche, falls die zweite Brillenglasfläche eine sphärische oder torische Brillenglasfläche ist, und eine asphärische oder atorische Brillenglasfläche, falls die zweite Brillenglasfläche eine asphärische oder atorische Brillenglasfläche ist, usw. Im Falle einer torischen zweiten Brillenglasfläche würde somit eine torische dritte Brillenglasfläche an die Differenzrandkurve angepasst und anschließend der bisher vorliegenden torischen zweiten Brillenglasfläche überlagert. Die Kriterien für die Anpassung der dritten Brillenglasfläche an die Differenzrandkurve können die gleichen Kriterien sein, wie sie auch für die Beurteilung der Abweichung der Pfeilhöhen der Freiformflächenrandkurve zu den Pfeilhöhen der Fassungsrandkurve vorgeschlagen wurden. Bei dieser Vorgehensweise liegt somit die Information über die Differenzen zwischen den Pfeilhöhen der Freiformflächenrandkurve und der Fassungsrandkurve in Form einer an die zweite Brillenglasfläche angepassten dritten Brillenglasfläche vor, was das Verändern der zweiten Brillenglasfläche mit geringem Aufwand ermöglicht.

In einer alternativen Ausgestaltung der iterativen Optimierung erfolgt das Verändern der zweiten Brillenglasfläche mit Hilfe eines Variationsverfahrens, d.h. im Rahmen eines Verfahrens, in dem Parameter der zweiten Brillenglasfläche variiert werden. Im Falle einer torischen zweiten Brillenglasfläche können die Parameter "Radien" und "Achslage" der torischen Fläche variiert werden. Zur Variation können gängige Variationsverfahren herangezogen werden. Mit einem Variationsverfahren kann die Optimierung auch ohne explizite Kenntnis der Differenzrandkurve erfolgen.

Im Rahmen des iterativen Optimierens besteht die Möglichkeit, beim Verändern der zweiten Brillenglasfläche den mittleren Flächenbrechwert der zweiten Brillenglasfläche konstant zu halten. Mit einer derartigen Randbedingung kann erreicht werden, dass sich bei der iterativen Optimierung die mittlere Krümmung der ersten Brillenglasfläche an einem Bezugspunkt des Brillenglases nicht ändert bzw. nur innerhalb vorgegebener Grenzen ändert. Zwar lässt sich damit in der Regel eine nicht ganz so gute Anpassung der Freiformflächenrandkurve an die Fassungsrandkurve erreichen, wie dies ohne diese Randbedingung möglich wäre, trotzdem können unter Verwendung der Randbedingung die Pfeilhöhenunterschiede zwischen der Freiformflächenrandkurve und der Fassungsrandkurve verringert werden. Grenzen für die zulässige Änderung der Krümmung der ersten Brillenglasfläche können sich beispielsweise ergeben, wenn die zweite Brillenglasfläche Fertigungsbedingt lediglich eine minimale oder maximale Krümmung aufweisen darf. Grenzen für die zulässige Änderung der Krümmung der Brillenglasvorderfläche können sich auch dadurch ergeben, dass eine Meniskenform des Brillenglases beibehalten werden soll.

Gemäß einem zweiten Aspekt der vorliegenden Erfindung wird ein Computerprogramm zum Anpassen eines Brillenglases mit einer ersten Brillenglasfläche, einer zweiten Brillenglasfläche und wenigstens einer mit dem Brillenglas zu erzielenden dioptrischen Wirkung an eine Brillenfassung mit einer bestimmten Fassungsrandkurve zur Verfügung gestellt. Das Computerprogramm umfasst Instruktionen, die, wenn sie auf einem Computer ausgeführt werden, den Computer dazu veranlassen, eine auf einer ersten Brillenglasfläche gebildete Freiformfläche an die Fassungsrandkurve der Brillenfassung anzupassen. Außerdem umfasst das Computerprogramm Instruktionen, die, wenn sie auf einem Computer ausgeführt werden, den Computer dazu veranlassen, zum Anpassen der Freiformfläche an die Fassungsrandkurve gleichzeitig die Freiformfläche und die zweite Brillenglasfläche im Hinblick auf eine Minimierung des Unterschiedes zwischen der Freiformflächenrandkurve und der Fassungsrandkurve sowie im Hinblick auf das Erreichen der wenigstens einen mit dem Brillenglas zu erzielenden dioptrischen Wirkung zu optimieren.

Das erfindungsgemäße Computerprogramm ermöglicht das Ausführen des erfindungsgemäßen Verfahrens auf einem Computer und somit die Realisierung der mit dem erfindungsgemäßen Verfahren verbundenen Vorteile mit Hilfe eines Computers. Das erfindungsgemäße Computerprogramm kann dabei insbesondere auch so weitergebildet werden, dass es die Ausführung der mit Bezug auf das erfindungsgemäße Verfahren beschriebenen Weiterbildungen auf einem Computer ermöglicht.

Gemäß einem dritten Aspekt der Erfindung wird ein Datenverarbeitungssystem zum Anpassen eines Brillenglases mit einer ersten Brillenglasfläche, einer zweiten Brillenglasfläche und wenigstens einer mit dem Brillenglas zu erzielenden dioptrischen Wirkung an eine Brillenfassung mit einer bestimmten Fassungsrandkurve zur Verfügung gestellt. Das Datenverarbeitungssystem umfasst einen Prozessor und wenigstens einen Speicher, wobei der Prozessor dazu ausgestaltet ist, basierend auf Instruktionen eines im Speicher gespeicherten Computerprogramms eine auf einer ersten Brillenglasfläche gebildete Freiformfläche an die Fassungsrandkurve der Brillenfassung anzupassen. Außerdem ist der Prozessor dazu ausgestaltet, basierend auf den Instruktionen des im Speicher gespeicherten Computerprogramms zum Anpassen der Freiformfläche an die Fassungsrandkurve gleichzeitig die Freiformfläche und die zweite Brillenglasfläche im Hinblick auf eine Minimierung des Unterschiedes zwischen der Freiformflächenrandkurve und der Fassungsrandkurve sowie im Hinblick auf das Erreichen der wenigstens einen mit dem Brillenglas zu erzielenden dioptrischen Wirkung zu optimieren.

Das erfindungsgemäße Datenverarbeitungssystem ermöglicht das Ausführen des erfindungsgemäßen Verfahrens und damit die Realisierung der mit dem erfindungsgemäßen Verfahren verbundenen Vorteile. Selbstverständlich kann das Datenverarbeitungssystem auch so weiter entwickelt werden, dass es die Ausführung der Weiterentwicklung des erfindungsgemäßen Verfahrens ermöglicht.

Gemäß einem vierten Aspekt der vorliegenden Erfindung wird ein nicht flüchtiges computerlesbares Speichermedium mit darauf gespeicherten Instruktionen zum Anpassen eines Brillenglases mit einer ersten Brillenglasfläche, einer zweiten Brillenglasfläche und wenigstens einer mit dem Brillenglas zu erzielenden dioptrischen Wirkung an eine Brillenfassung mit einer bestimmten Fassungsrandkurve zur Verfügung gestellt. Wenn die Instruktionen auf einem Computer ausgeführt werden, veranlassen sie den Computer dazu, eine auf einer ersten Brillenglasfläche gebildete Freiformfläche an die Fassungsrandkurve der Brillenfassung anzupassen. Außerdem umfasst das Speichermedium darauf gespeicherte Instruktionen, die, wenn sie auf einem Computer ausgeführt werden, den Computer dazu veranlassen, zum Anpassen der Freiformfläche an die Fassungsrandkurve gleichzeitig die Freiformfläche und die zweite Brillenglasfläche im Hinblick auf eine Minimierung des Unterschiedes zwischen der Freiformflächenrandkurve und der Fassungsrandkurve sowie im Hinblick auf das Erreichen der wenigstens einen mit dem Brillenglas zu erzielenden dioptrischen Wirkung zu optimieren.

Das erfindungsgemäße computerlesbare Speichermedium ermöglicht das Laden des erfindungsgemäßen Computerprogramms in einen Computer oder ein erfindungsgemäßes Datenverarbeitungssystem und damit das Ausführen des erfindungsgemäßen Verfahrens um die mit Bezug auf das erfindungsgemäße Verfahren beschriebenen Vorteile zu erreichen. Selbstverständlich kann das computerlesbare Speichermedium auch darauf gespeicherte Informationen umfassen, die das Ausführen der Weiterbildungen des erfindungsgemäßen Verfahrens ermöglichen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt ein erstes exemplarisches Ausführungsbeispiel für das Verfahren zum Bestimmen eines an die Fassungsrandkurve einer Brillenfassung angepassten Brillenglases.
- Figur 2: zeigt ein zweites exemplarisches Ausführungsbeispiel für das Verfahren zum Bestimmen eines an die Fassungsrandkurve einer Brillenfassung angepassten Brillenglases.

In der nachfolgenden Beschreibung von exemplarischen Ausführungsbeispielen der Erfindung sowie in der allgemeinen Beschreibung der Erfindung kommen die nachfolgenden Definitionen zur Anwendung:

### Brillenfassung

Vorrichtung, die dazu ausgestaltet ist, ein Brillenglas zu halten und derart am Kopf getragen zu werden, dass sich das Brillenglas vor dem Auge befindet.

### Brillenglasfläche

Eine Brillenglasfläche ist eine zur Durchsicht durch das Brillenglas vorgesehene Fläche.

### Brillenglasrückfläche

Die Brillenglasrückfläche ist diejenige Brillenglasfläche, die bei bestimmungemäßem Gebrauch eines Brillenglases zum Auge hin weist bzw. dem Auge am nächsten ist.

### Brillenglasvorderfläche

Die Brillenglasvorderfläche ist diejenige Brillenglasfläche, die bei bestimmungemäßem Gebrauch eines Brillenglases vom Auge weg weist bzw. sich am entferntesten vom Auge befindet.

### Dioptrische Wirkung

Brillengläser weisen wenigstens eine dioptrische Wirkung auf, wobei der Begriff "dioptrische Wirkung" ein Sammelbegriff für die fokussierende Wirkung und die prismatische Wirkung (DIN ISO 13666:2013-10, Abschnitt 10.9) ist. Der Begriff "fokussierende Wirkung" ist wiederum ein Sammelbegriff für die sphärische Wirkung des Brillenglases, gemäß der ein paraxiales, paralleles Strahlenbündel auf einen Punkt fokussiert wird, und die astigmatische Wirkung des Brillenglases, gemäß der ein paraxiales, paralleles Strahlenbündel auf zwei zueinander senkrecht verlaufende Linien fokussiert wird. Ein Strahlenbündel soll im Rahmen der vorliegenden Beschreibung als ein paraxiales Strahlenbündel angesehen werden, wenn es einen Durchmesser von 0,05 mm, insbesondere von 0,01 mm nicht überschreitet.

### Durchmuschelung

Der Begriff Durchmuschelung beschreibt die Durchbiegung der Form der Brillenglasfassung. Die Durchmuschelung kann als Krümmung derjenigen sphärischen Fläche angesehen werden, bei der die geringste Abweichung der dreidimensionalen Fassungsrandkurve zur sphärischen Fläche vorliegt, d.h. als Krümmung der am besten an die Fassungsrandkurve angepassten sphärischen Fläche.

### Fassungsrandkurve

Die Fassungsrandkurve einer Brillenfassung ist eine von der Geometrie der Brillenfassung abhängige dreidimensionale Kurve, die bestimmt, welche Form ein Brillenglas haben muss, damit es von der Brillenfassung gehalten werden kann. Die Fassungsradkurve kann dabei insbesondere die Berandung der Brillenfassung an ihrer Vorderseite oder den Verlauf der Fassungsnut beschreiben, wobei die Fassungsnut eine Nut am inneren Rand der Brillenfassung ist, die zur Aufnahme einer Facette am Rand des Brillenglases ausgebildet ist.

### Flächenbrechwert

Der Flächenbrechwert ist ein Maß für die Fähigkeit eines einen Flächenpunkt umgebenden Flächenabschnitts, die Vergenz (Brechzahl des Brillenglasmaterials dividiert durch den Krümmungsradius der Wellenfront) eines in Luft auf den Flächenabschnitt auftreffenden Strahlenbündels zu ändern (DIN ISO 13666:2013-10, Abschnitt 9.4).

### Freiformfläche

Unter einer Freiformfläche versteht man im weiteren Sinn eine komplexe Fläche, die sich insbesondere mittels gebietsweise definierter Funktionen, insbesondere zweimal stetig differenzierbarer gebietsweise definierter Funktionen darstellen lässt. Beispiel für geeignete gebietsweise definierte Funktionen sind (insbesondere stückweise) polynomiale Funktionen (insbesondere polynomiale Splines, wie z.B. bikubische Splines, höhergradige Splines vierten Grades oder höher, Zernike-Polynome, Forbes-Flächen, Tschebyschew-Polynome, polynomiale non-uniform rational B-Splines (NURBS)) oder Fourierreihen. Hiervon zu unterscheiden sind einfache Flächen, wie z.B. sphärische Flächen, asphärische Flächen, zylindrische Flächen, torische Flächen oder auch die auf S. 12, Z. 6-13 der WO 89/04986 A1 beschriebenen Flächen, die zumindest längs eines Hauptmeridians als Kreis beschrieben sind. Eine Freiformfläche im engeren Sinn entsprechend dem Abschnitt 2.1.2 der DIN SPEC 58194 vom Dezember 2015 ist eine in Freiformtechnologie gefertigte Brillenglasfläche, die im Rahmen der Grenzen der Differentialgeometrie mathematisch beschrieben wird und weder punkt- noch achsensymmetrisch ist.

### Freiformflächenrandkurve

Die Freiformflächenrandkurve ist diejenige Kurve, die eine Freiformfläche seitliche begrenzt.

### Differenzrandkurve

Die Differenzrandkurve ist im Rahmen der vorliegenden Beschreibung eine Kurve, die an jedem Punkt eine Pfeilhöhendifferenz zwischen der Pfeilhöhe der Freiformflächenrandkurve und der Pfeilhöhe der Fassungsrandkurve relativ zu einer Bezugsebene repräsentiert. Hierbei ist es vorteilhaft, wenn die Projektion der Freiformflächenrandkurve mit der Projektion der Fassungsrandkurve auf eine geeignete Bezugsebene übereinstimmt, so dass die Pfeilhöhendifferenz beider Kurven bezüglich dieser Bezugsebene gebildet werden kann.

### Gebrauchsbedingungen

Der Begriff "Gebrauchsbedingungen" bezeichnet die Position und die Orientierung der Brille in Bezug auf die Augen und das Gesicht des Trägers während des Tragens der Brille. Die Gebrauchsbedingungen lassen sich bspw. durch den Vorneigungswinkel (DIN ISO 13666:2013-10, Abschnitt 5.18), auch pantoskopischer Winkel genannt, den Fassungsscheibenwinkel (DIN ISO 13666:2013-10, Abschnitt 17.3) und den Hornhaut-Scheitelabstand (DIN ISO 13666:2013-10, Abschnitt 5.27) angeben und sind für jedes Brillenglas an den jeweiligen Träger angepasst. Typische Werte für den Vorneigungswinkel liegen zwischen -20 Grad und +30 Grad, typische Werte für den Hornhaut-Scheitelabstand liegen im Bereich zwischen 5 mm und 30 mm und typische Werte für den Fassungsscheibenwinkel liegen im Bereich von -5 Grad bis +30 Grad. Neben dem Vorneigungswinkel, dem Fassungsscheibenwinkel und dem Hornhaut-Scheitelabstand gehen in die Gebrauchsbedingungen in der Regel auch der Pupillenabstand gemäß DIN ISO 13666:2013-10, Abschnitt 5.29, also der Abstand zwischen den Mittelpunkten der Pupillen für den Fall, dass die Augen bei Blickrichtung geradeaus ein unendlich entferntes Objekt fixieren, die Zentrierdaten, also die zur Zentrierung des Brillenglases vor dem Auge nötigen Maße und Abstände, und das Objektabstandsmodell, welches festlegt, für welchen Objektabstand ein bestimmter Punkt auf der Brillenglasoberfläche optimiert ist, ein. Die Gebrauchsbedingungen können individuelle Gebrauchsbedingungen sein, d.h. sie sind an einen spezifischen Träger angepasst, oder allgemeine Gebrauchsbedingungen, d.h. sie sind an eine definierte Gruppe von Trägern angepasst.

### Grundkurve

Die Grundkurve gibt gemäß DIN ISO 1366:2013-10, Abschnitt 11.4.2 den nominalen Flächenbrechwert (oder die nominale Krümmung) der fertigen Brillenglasfläche eines Brillenglashalbfabrikats, auch Brillenglasblank genannt, oder eines fertigen Brillenglases an. Diese fertige Brillenglasfläche ist häufig die Brillenglasvorderfläche.

### Optimieren/iteratives Optimieren

Als Optimieren bezeichnet man die Anpassung von Parametern eines Systems derart, dass eine gegebene, von den Parametern abhängige Zielfunktion ein Maximum oder ein Minimum zumindest näherungsweise erreicht. Ein iteratives Optimieren ist ein Verfahren zum Optimieren von Parametern unter Verwendung sich schrittweise wiederholender Rechenvorgänge.

### Pfeilhöhe

De Pfeilhöhe eines Punktes einer Linsenfläche ist ein Maß für den Abstand dieses Punktes von einer durch einen Referenzpunkt der Linsenfläche verlaufenden Referenzebene. Sie kann bspw. durch den Abstand einer durch den Punkt verlaufenden, zur Referenzebene parallelen Ebene von der Referenzebene angegeben werden.

### Scheibenebene

Als Scheibenebene wird eine Ebene tangential zur Vorderfläche einer in die Brillenfassung eingearbeiteten Demo- oder Stütz-Scheibe in deren geometrischen Scheibenmittelpunkt bezeichnet (DIN ISO 13666:2013-10, Abschnitt 17.1)

### sphärische Fläche/asphärische Fläche

Als sphärische Fläche wird eine Fläche angesehen, die den Teil einer Innenfläche oder einer Außenfläche einer Kugel ist (vgl. DIN ISO 13666:2013-10, Abschnitt 7.1). Eine asphärische Fläche ist demgegenüber eine Rotationsfläche mit einer sich vom Scheitelpunkt zur Peripherie hin kontinuierlich ändernden Krümmung (DIN ISO 13666:2013-10, Abschnitt 7.3).

### TABO-Schema

Das TABO-Schema ist ein Schema, das u.a. zum eindeutigen Angeben der Achslagen für zylindrische oder prismatische Korrektionen Verwendung findet. Im TABO-Schema wird angenommen, dass sich ein Betrachter dem Brillenträger gegenüber befindet. Es umfasst zwei Kreise mit entgegen dem Uhrzeigersinn von 0 bis 360 Grad verlaufenden Markierungen, wobei sich die 0 Grad-Richtung bzw. die 360 Grad-Richtung horizontal rechts befindet, so dass sich die 0 Grad-Richtung bzw. die 360 Grad-Richtung am linken Auge temporal und am rechten Auge nasal befindet.

### torische Fläche/atorische Fläche

Eine torische Fläche ist eine Fläche, die zwei zueinander senkrechte Hauptschnitte unterschiedlicher Krümmung besitzt, wobei der Querschnitt in beiden Hauptschnitten nominell kreisförmig ist (DIN ISO 13666:2013-10, Abschnitt 7.5). Eine atorische Fläche ist eine Fläche, die zwei zueinander senkrechte Hauptschnitte unterschiedlicher Krümmung besitzt und bei der der Querschnitt in mindestens einem der Hauptschnitte nicht kreisförmig ist (DIN ISO 13666:2013-10, Abschnitt 7.6)

### Überlagern von Flächen

Überlagern von Flächen ist ein Verfahren zur Modifikation einer ersten Fläche durch eine zweite Fläche. Das Überlagern kann in einem kartesischen Koordinatensystem bspw. durch Addieren der z-Komponenten der Flächenkoordinaten an Punkten der jeweiligen Flächen, die dieselben x- und y-Koordinaten besitzen, erfolgen.

### Variationsverfahren

Ein Variationsverfahren ist ein Verfahren zum Finden einer Näherungslösung für ein mathematisches Problem wie etwa ein Optimierungsproblem, in dem Anfangswerte für Parameter variiert werden, bis eine vorgegeben Größe eine vorgegebene Bedingung erfüllt, bspw. minimal oder maximal wird.

### Verordnung

Der Begriff "Verordnung", bezeichnet eine Zusammenstellung, in der die für die Korrektion einer diagnostizierten Fehlsichtigkeit notwendigen dioptrischen Wirkungen in Form geeigneter Werte angegeben sind. Im Falle einer sphärischen Wirkung kann die Verordnung einen Wert "Sph" für Sphäre enthalten. Im Falle einer astigmatischen Wirkung kann die Verordnung Werte "Cyl" für Zylinder und "Ach" für Achse und im Falle einer prismatischen Wirkung einen Wert für Prisma enthalten. Die Verordnung kann darüber hinaus weitere Werte enthalten, im Falle von Mehrstärken-Brillengläsern bspw. den Wert "Add", welcher die Differenz zwischen dem Scheitelbrechwert im Nahteil des Brillenglases und im Fernteil des Brillenglases angibt. Auch ein Wert "PD" für den Pupillenabstand kann in der Verordnung enthalten sein. Synonyme für den Begriff "Verordnung" sind die Begriffe "Rezept" und "Verschreibung".

### Zieldesign

Ein Zieldesign im Sinne der vorliegenden Erfindung ist die Vorgabe einer Verteilung von Bildfehlern über das Brillenglas oder von Flächeneigenschaften des Brillenglases, die in einem Optimierprozess erreicht werden sollen. Im ersten Fall spricht man vom optischen Zieldesign, im zweiten Fall vom Flächenzieldesign. Ein optisches Zieldesign ist demnach die Vorgabe einer Verteilung von Bildfehlern über das gesamte Brillenglas oder aber auch darüber hinaus im Brillenträgerstrahlengang (z.B. astigmatische Restabweichung, sphärische Restabweichung, Prisma, Horizontalsymmetrie, Verzeichnung, aber auch Fehler höherer Ordnung wie z.B. Koma). Zusätzlich kann das optische Zieldesign noch Vorgaben für die astigmatischen und sphärischen Restabweichungen an Bezugspunkten (z.B. Fern-Konstruktionsbezugspunkt oder Nah-Konstruktionsbezugspunkt) oder die Addition im Messstrahlengang eines Messgerätes, beispielsweise im Strahlengang eines Scheitelbrechwertmessgeräts, enthalten. In einem Flächenzieldesign sind dagegen im Optimierprozess zu erreichende Flächeneigenschaften der zu formenden Freiformfläche angegeben, bspw. eine Flächenbrechkraft oder ein Flächenastigmatismus. Die Flächenbrechkraft ist dabei ein Maß für die Fähigkeit eines einen Optimierpunkt umgebenden Flächenabschnitts, die Vergenz (Brechzahl des Brillenglasmaterials dividiert durch den Krümmungsradius der Wellenfront) eines in Luft auf den Flächenabschnitt auftreffenden Strahlenbündels zu ändern. Der Flächenastigmatismus an einem Optimierpunkt stellt die Differenz der Flächenbrechkräfte in den Hauptschnitten an einem Optimierpunkt der Fläche dar.

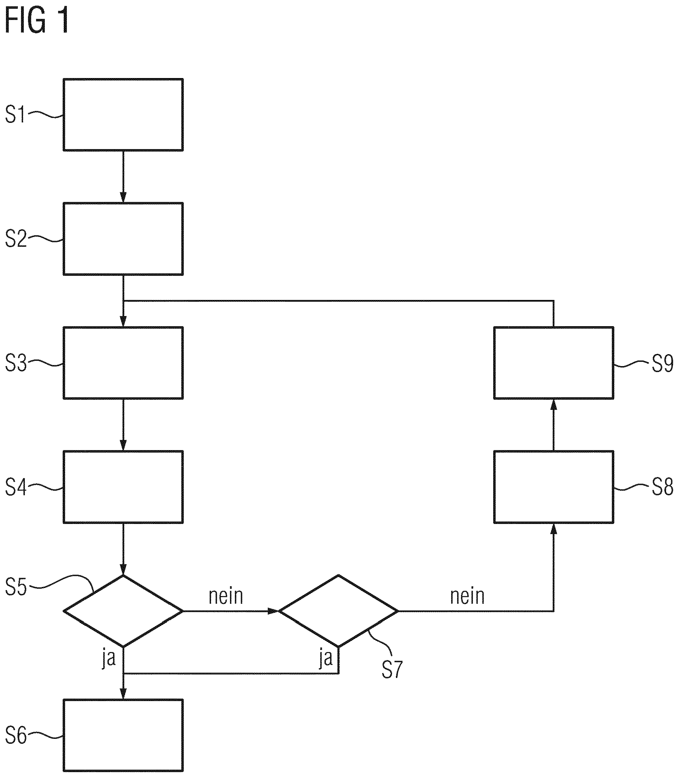

Ein erstes exemplarisches Ausführungsbeispiel für das erfindungsgemäße computerimplementierte Verfahren zum Bestimmen eines an die Fassungsrandkurve einer Brillenfassung angepassten Brillenglases wird nachfolgend mit Bezug auf Figur 1 beschrieben. Das Verfahren dient dabei dazu, zumindest auf der Basis von Daten einer vorgegebenen Verordnung und einer vorgegebenen Fassungsform mit einer bestimmten Fassungsrandkurve ein an die Fassungsrandkurve angepasstes Brillenglas zu ermitteln. Optional können zu den Daten der Verordnung und der Fassungsform noch Daten von Gebrauchs- und Dickenbedingungen und/oder vorgegebene Zentrierdaten und/oder ein vorgegebenes Zieldesign hinzukommen.

Zum Beginn des Verfahrens wird in Schritt S1 eine mittlere Krümmung für eine erste Brillenglasfläche vorgegeben. Im vorliegenden exemplarischen Ausführungsbeispiel ist diese erste Brillenglasfläche die Brillenglasvorderfläche. Die Krümmungsvorgabe wird typischerweise einem Bezugspunkt der Brillenglasvorderfläche vorgegeben. Die Vorgabe der mittleren Krümmung der Brillenglasvorderfläche kann beispielsweise durch Vorgabe einer Grundkurve der Brillenglasvorderfläche erfolgen. Die Krümmungsvorgabe für die erste Brillenglasfläche kann dabei insbesondere aus der Durchmuschelung der Fassung hergeleitet werden. Die Grundkurve kann dabei insbesondere so gewählt werden, dass die mittlere Krümmung der Brillenglasvorderfläche die Krümmung der am besten an die Fassungsrandkurve angepassten sphärischen Fläche ist. Das Brillenglas mit der vorgegebenen mittleren Krümmung dient dann als Ausgangsbrillenglas für die nachfolgenden Schritte.

Nach der Vorgabe der Krümmung für die Brillenglasvorderfläche in Schritt S1 erfolgt in Schritt S2 das Berechnen einer torischen Brillenglasrückfläche für das Ausgangsbrillenglas derart, dass die verordnungsgemäße dioptrische Wirkung mit dem Brillenglas näherungsweise erreicht wird. Obwohl hier und im Folgenden lediglich von einer dioptrischen Wirkungen die Rede ist, erkennt der Fachmann, dass mit dem Brillenglas ggf. auch mehrere dioptrische Wirkungen erzielt werden können, bspw. eine dioptrische Wirkung für das Sehen in der Ferne und eine dioptrische Wirkung für das Sehen in der Nähe. Wenn in der Beschreibung der Erfindung von einer mit dem Brillenglas zu erzielenden dioptrischen Wirkung die Rede ist, sollen damit daher auch die Fälle mit umfasst sein, in denen mit dem Brillenglas mehrere dioptrische Wirkungen erzielt werden sollen. Dabei können die Gebrauchsbedingungen der Brille, insbesondere individuelle Gebrauchsbedingungen der Brille, Berücksichtigung finden. Das Berücksichtigen der Gebrauchsbedingungen ermöglicht eine besonders gute Anpassung des Brillenglases an den Brillenträger.

Danach wird in Schritt S3 ausgehend von einem Brillenglas mit einer die in Schritte S1 vorgegebene Krümmung aufweisenden Brillenglasvorderfläche und der in Schritt S2 berechneten torischen Brillenglasrückfläche eine Freiformfläche für die Brillenglasvorderfläche optimiert. Die Optimierung erfolgt dabei im Hinblick auf das Erreichen der mit dem Brillenglas zu erzielenden dioptrischen Wirkung und entsprechend einem optischen Zieldesign für das gesamte Brillenglas, evtl. Dickenvorgaben für das Brillenglas und unter Berücksichtigung der Zentrierdaten. Auch hierbei können wieder die Gebrauchsbedingungen der Brille, insbesondere individuelle Gebrauchsbedingungen der Brille, Berücksichtigung finden. Optional können in diese Optimierung zusätzlich auch noch Forderungen bzgl. der Randabweichung zum Fassungsrand eingehen (die aber i.a. den dioptrischen Anforderungen entgegenstehen).

Es sei darauf hingewiesen, dass man das Verfahren auch ohne Berücksichtigung einer Vorgabe für die mittleren Krümmung der Brillenglasvorderfläche direkt mit einer beliebig vorgegebenen torischen Rückfläche in Schritt S2 starten und dann mit Schritt S3 fortfahren kann. Dieses Vorgehen kann aber zu einem Iterationsverfahren mit mehr Iterationsschritten als bei einem Verfahren, bei dem die oben beschriebenen Schritte S1 und S2 ausgeführt werden, führen.

Für die Optimierung wird die Brillenglasvorderfläche mit Hilfe parametrisierter, gebietsweise definierter Funktionen beschrieben. Außerdem werden ein Zieldesign, welches im vorliegenden exemplarischen Ausführungsbeispiel ein optisches Zieldesign ist und somit eine Verteilung von Bildfehlern repräsentiert, und eine Zielfunktion, deren Wert von der Abweichung der mit dem Brillenglas erzielten Verteilung von Bildfehlern von der im Zieldesign vorgegebenen Verteilung abhängt. Der Wert der Zielfunktion stellt dabei ein Maß dafür dar, wie genau die im Zieldesign vorgegebene Verteilung erreicht wird. Die Parameterwerte der gebietsweise definierten Funktionen werden im Rahmen der Optimierung so lange variiert, bis der Wert der Zielfunktion eine Abbruchbedingung erfüllt, die zum Abbruch der Variation der Parameterwerte führt. Das Ermitteln der mit dem Brillenglas erzielten Verteilung von Bildfehlern erfolgt dabei mittels einer Strahlrechung, welche die Bildfehler für den Brillenträgerstrahlengang oder für den Strahlengang in einem Messgerät an vorgegebenen Optimierpunkten des Brillenglases berechnet. Die Strahlrechnung für den Brillenträgerstrahlengang berechnet dabei die Werte für den Bildfehler an den einzelnen Optimierpunkten jeweils für ein Strahlenbündel, dessen Hauptstrahl durch den Optimierpunkt und durch den Augendrehpunkt, also denjenigen Punkt, um den sich das Auge bei Blickbewegungen dreht, verläuft. Die Strahlrechnung für den Strahlengang in dem Messgerät berechnet die mit dem Messgerät an den einzelnen Optimierpunkten zu messenden Messwerte jeweils für ein Strahlenbündel, das durch den Optimierpunkt entsprechend dem in dem verwendeten Messgerät für die Messung an diesem Optimierpunkt vorgesehenen Strahlverlauf verläuft. Beispiele für Verfahren zur Optimierung von Brillengläsern sind in DE 10 2012 000 390 A1 und in WO 2008/089999 A1 beschrieben. Auf diese Dokumente wird hinsichtlich weiterer Details der Optimierung verwiesen. Statt wie im exemplarischen Ausführungsbeispiel mit Hilfe eines optischen Zieldesigns kann die Optimierung auch mit Hilfe eines Flächenzieldesigns erfolgen.

Mit dem so optimierten Brillenglas erfolgt dann in Schritt S4 das Ermitteln einer Differenzrandkurve, welche für jeden Punkt der Freiformflächenrandkurve oder für eine Anzahl ausgewählter Punkte der Freiformflächenrandkurve die Pfeilhöhendifferenz zwischen ihrer Pfeilhöhe und der Pfeilhöhe der Fassungsrandkurve an den entsprechenden Punkten repräsentiert.

In Schritt S5 wird sodann als Maß für die Abweichung der nach der Optimierung der Freiformfläche vorliegenden Freiformflächenrandkurve von der Fassungsrandkurve die maximale in der Differenzrandkurve vorliegende Pfeilhöhendifferenz ermittelt und geprüft, ob die maximale in der Differenzrandkurve vorliegende Pfeilhöhendifferenz unter einem vorgegebenen Grenzwert lieget. Falls dies der Fall ist, schreitet das Verfahren zu Schritt S6 fort, in dem die Geometrie des Brillenglases mit der zuvor bestimmten Brillenglasrückfläche und der mit der optimierten Freiformfläche versehenden Brillenglasvorderfläche zuzüglich Mess- und Fertigungsdaten als an die Fassungsrandkurve angepasstes Brillenglas ausgegeben wird.

Falls in Schritt S5 festgestellt wird, dass die maximale in der Differenzrandkurve vorliegende Pfeilhöhendifferenz nicht unter dem vorgegebenen Grenzwert liegt, schreitet das Verfahren zu Schritt S7 fort, in dem geprüft wird, ob die maximale Veränderung der in der Differenzrandkurve vorliegenden Pfeilhöhendifferenzen gegenüber den in der vorangegangenen Differenzrandkurve vorliegenden Pfeilhöhendifferenzen unter einem vorgegebenen Grenzwert liegt. Ist dies der Fall, schreitet das Verfahren ebenfalls zu Schritt S6 fort. Andernfalls schreitet das Verfahren zu Schritt S8 fort, in dem ein Fit einer torischen Fläche an die in Schritt S4 ermittelte Differenzrandkurve vorgenommen wird. Das Verfahren schreitet danach zu Schritt S9 fort.

In Schritt S9 erfolgt ein Verändern der torischen Brillenglasrückfläche. Das Verändern der torischen Brillenglasrückfläche erfolgt im vorliegenden exemplarischen Ausführungsbeispiel, indem eine neue torische Brillenglasrückfläche durch Überlagerung der bisherigen torischen Brillenglasrückfläche mit der in Schritt S8 ermittelten torischen Fläche bzw. ein Abschnitt dieser torischen Fläche gebildet wird. Sodann schreitet das Verfahren zu Schritt S3 fort, in dem die Freiformfläche auf der Brillenglasvorderfläche neu optimiert wird, wobei die torische Brillenglasrückfläche nunmehr von der in Schritt S9 veränderten torischen Brillenglasrückfläche gebildet ist.

Die Schritte S3, S4, S5, S7, S8 und S9 werden solange wiederholt, bis in Schritt S5 festgestellt wird, dass die maximale in der Differenzrandkurve enthaltene Pfeilhöhendifferenz den vorgegebenen Grenzwert nicht mehr überschreitet oder in Schritt S7 festgestellt wird, dass die maximale Veränderung der in der Differenzrandkurve vorliegenden Pfeilhöhendifferenzen gegenüber den in der vorangegangenen Differenzrandkurve vorliegenden Pfeilhöhendifferenzen den dafür vorgesehenen Grenzwert unterschreitet. Optional kann das Verfahren auch die Zahl der erfolgten Iterationen erfassen und das Verfahren nach Erreichen einer vorgegebenen Maximalanzahl an Iterationen ohne Ergebnis abbrechen. In diesem Fall kann das Verfahren gegebenenfalls mit einer anderen vorgegebenen Krümmung der Brillenglasvorderfläche erneut ausgeführt werden.

In dem Verfahren des ersten exemplarischen Ausführungsbeispiels erfolgt mit Hilfe der iterativen Optimierung der zweiten Brillenglasfläche und der Freiformfläche, im vorliegenden Ausführungsbeispiel also der auf der Brillenglasvorderfläche gebildeten Freiformfläche und der torischen Brillenglasrückfläche, eine gleichzeitige Optimierung sowohl der Freiformfläche als auch der zweiten Brillenglasfläche im Hinblick auf eine Minimierung des Unterschiedes zwischen der Freiformflächenrandkurve und der Fassungsrandkurve sowie im Hinblick auf das Erreichen der mit dem Brillenglas zu erzielenden dioptrischen Wirkung. Dabei wird ausgehend von einem Brillenglas, welches die zuvor optimierte Freiformfläche und die bisher vorliegende zweite Brillenglasfläche aufweist, die zweite Brillenglasfläche verändert, und anschließend wird die Freiformfläche im Hinblick auf das Erreichen der mit dem Brillenglas zu erzielenden dioptrischen Wirkung optimiert. Die Anzahl der Iterationen kann dabei eins sein, wenn die zum Beginn des Verfahrens bestimmte zweite Brillenglasfläche und die zu Beginn des Verfahrens optimierte Freiformfläche bereits zu einer hinreichend genauen Anpassung der Freiformflächenrandkurve an die Fassungsrandkurve führen, d.h. zu einer Anpassung, bei der das Maß für die Abweichung der nach der Optimierung der Freiformfläche vorliegenden Freiformflächenrandkurve von der Fassungsrandkurve nicht überschritten wird und außerdem die geforderte dioptrische Wirkung hinreichend genau erreicht wird.

Statt eines einzigen Grenzwertes kann in Schritte S5 auch eine Grenzwertkurve Verwendung finden, die für unterschiedliche Bereiche der Freiformflächenrandkurve unterschiedliche Grenzwerte definiert. Im Extremfall kann für jeden Punkt der Freiformflächenrandkurve ein eigener Grenzwert definiert werden. Dadurch wird es möglich, in Bereichen des Brillenglases, in denen größere Abweichungen von der Fassungsrandkurve akzeptiert werden können, die Anforderungen gegenüber anderen Bereichen des Brillenglases zu reduzieren.

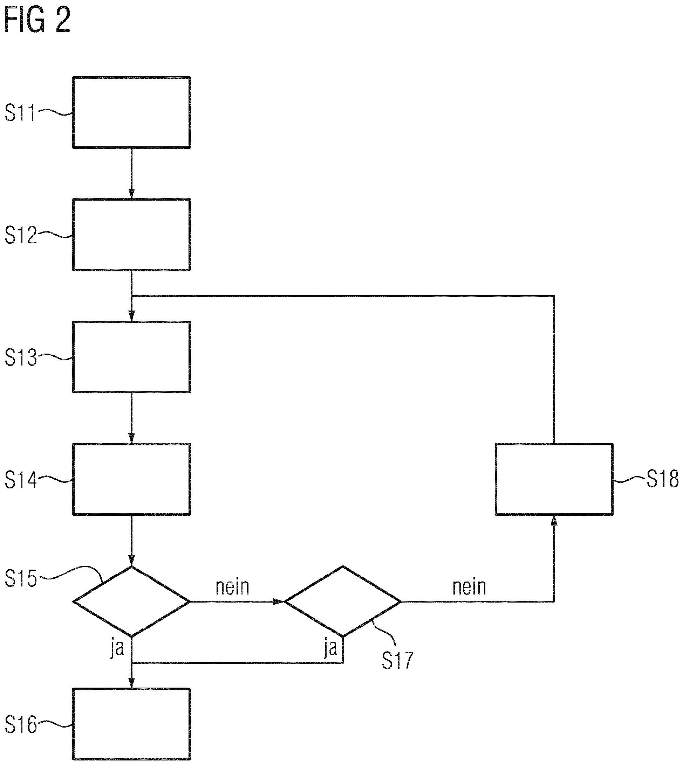

Ein zweites exemplarisches Ausführungsbeispiel für das erfindungsgemäße computerimplementierte Verfahren zum Bestimmen eines an die Fassungsrandkurve einer Brillenfassung angepassten Brillenglases wird nachfolgend mit Bezug auf die Figur 2 beschrieben.

Wie im ersten exemplarischen Ausführungsbeispiel werden auch im zweiten exemplarischen Ausführungsbeispiel eine Krümmung für eine erste Brillenglasfläche, die auch im zweiten exemplarischen Ausführungsbeispiel die Brillenglasvorderfläche ist, vorgegeben (Schritt S11) und für ein Ausgangsbrillenglas, welches die erste Brillenglasfläche mit der vorgegebenen Krümmung aufweist, eine zweite Brillenglasfläche im Hinblick auf die mit dem Brillenglas zu erzielende verordnungsgemäße dioptrische Wirkung bestimmt (Schritt S12). Auch im zweiten exemplarischen Ausführungsbeispiel ist die zweite Brillenglasfläche die Brillenglasrückfläche.

In Schritt S13 erfolgt dann das Optimieren einer Freiformfläche auf der Brillenglasvorderfläche im Hinblick auf das Erreichen der mit dem Brillenglas zu erzielenden dioptrischen Wirkung. Die Schritte S11, S12 und S13 unterscheiden sich nicht von den Schritten S1, S2 und S3 des ersten exemplarischen Ausführungsbeispiels. Wie im ersten exemplarischen Ausführungsbeispiel besteht die Möglichkeit, direkt mit einer beliebig vorgegebenen torischen Rückfläche in Schritt S12 zu starten und dann mit Schritt S13 fortzufahren.

Im Unterschied zu Schritt S4 des ersten exemplarischen Ausführungsbeispiels wird in Schritt S14 des zweiten exemplarischen Ausführungsbeispiels jedoch für das Brillenglas mit der zuvor bestimmten torischen Rückfläche und der optimierten Freiformfläche als Maß für die Abweichung der Freiformflächenrandkurve von der Fassungsrandkurve die euklidische Norm herangezogen, in dem die Quadrate der in der Differenzrandkurve enthaltenen Pfeilhöhendifferenzen i.a. an ausgewählten Randpunkten gebildet und aufsummiert werden und anschließend die Wurzel aus der Summe gezogen wird. Nach dem Berechnen der euklidischen Norm der Differenzrandkurve in Schritt S14 schreitet das Verfahren zu Schritt S15 fort, in dem überprüft wird, ob die in Schritt S14 ermittelte euklidische Norm unter einem vorgegebenen Grenzwert liegt. Falls dies der Fall ist, schreitet das Verfahren von Schritt S15 zu Schritt S16 fort und gibt die Geometrie des Brillenglases mit der in Schritt S12 bestimmten torischen Rückfläche und der in Schritt S13 optimierten Freiformfläche zuzüglich Mess- und Fertigungsdaten als an die Fassungsrandkurve angepasstes Brillenglas aus.

Falls in Schritt S15 festgestellt wird, dass der Wert der euklidischen Norm der Differenzrandkurve nicht unter dem vorgegebenen Grenzwert liegt, schreitet das Verfahren zu Schritt S17 fort. In diesem wird geprüft, ob die Differenz zwischen dem berechneten Wert der euklidischen Norm der Differenzrandkurve und dem im vorherigen Iterationsschritt berechneten Wert der euklidischen Norm der Differenzrandkurve einen vorgegebenen Grenzwert unterschreitet. Wenn dies der Fall ist, schreitet das Verfahren ebenfalls zu Schritt S16 fort und gibt das Brillenglas mit der zuvor berechneten torischen Rückfläche und der zuvor optimierten Freiformfläche als an die Fassungsrandkurve angepasstes Brillenglas aus.

Wenn in Schritt S17 festgestellt wird, dass die Differenz zwischen dem berechneten Wert der euklidischen Norm der Differenzrandkurve und dem im vorherigen Iterationsschritt berechneten Wert der euklidischen Norm der Differenzrandkurve den vorgegebenen Grenzwert nicht unterschreitet, schreitet das Verfahren zu Schritt S18 fort. In diesem Schritt erfolgt ein Verändern der torischen Brillenglasrückfläche mit Hilfe einer Variationsmethode. Dabei werden die Parameter "Radien" und "Achslage" der torischen Rückfläche mit Hilfe eines geeigneten mathematischen Minimierungsverfahrens variiert, um eine neue torische Rückfläche zu bestimmen. In einem solchen Minimierungsverfahren wird eine Zielfunktion vorgegeben, die durch Variation der Parameter minimiert wird. Die Zielfunktion ist hierbei wieder der Wert der euklidischen Norm der Differenzrandkurve, die für jede Brillenglasrückfläche nach der jeweiligen Optimierung der als Freiformfläche ausgebildeten Brillenglasvorderfläche berechnet werden kann, d.h. diese Variation ist dann eine übergeordnete Optimierung zur Minimierung der euklidischen Norm der Differenzrandkurve

Nachdem in Schritt S18 mit Hilfe eines Variationsverfahrens eine veränderte torische Brillenglasrückfläche bestimmt worden ist, schreitet das Verfahren zu Schritt S13 fort. Die Schritte S13, S14, S15, S17 und S18 werden iterativ so lange wiederholt, bis in Schritt S15 festgestellt wird, dass die euklidische Norm der Differenzrandkurve den vorgegebenen Grenzwert unterschreitet oder in Schritt S17 festgestellt wird, dass die Differenz zwischen dem berechneten Wert der euklidischen Norm der Differenzrandkurve und dem im vorherigen Iterationsschritt berechneten Wert der euklidischen Norm der Differenzrandkurve den hierfür vorgegebenen Grenzwert unterschreitet. Wie im ersten exemplarischen Ausführungsbeispiel besteht auch im zweiten exemplarischen Ausführungsbeispiel die Möglichkeit, eine maximale Anzahl an Iterationen vorzusehen, nach deren Erreichen das Verfahren erfolglos abgebrochen wird. Auch in diesem Fall besteht die Möglichkeit, das Verfahren mit einer anderen für die erste Brillenglasfläche vorgegebenen Krümmung erneut durchzuführen.

Wie im ersten exemplarischen Ausführungsbeispiel erfolgt auch im zweiten exemplarischen Ausführungsbeispiel mit Hilfe der iterativen Optimierung der zweiten Brillenglasfläche und der Freiformfläche, im vorliegenden Ausführungsbeispiel also der auf der Brillenglasvorderfläche gebildeten Freiformfläche und der torischen Brillenglasrückfläche, eine gleichzeitige Optimierung sowohl der Freiformfläche als auch der zweiten Brillenglasfläche im Hinblick auf eine Minimierung des Unterschiedes zwischen der Freiformflächenrandkurve und der Fassungsrandkurve sowie im Hinblick auf das Erreichen der mit dem Brillenglas zu erzielenden dioptrischen Wirkung.

In allen Ausführungsbeispielen kann das Verändern der torischen Brillenglasrückfläche (Schritt S9 im ersten exemplarischen Ausführungsbeispiel und in Schritt S18 im zweiten exemplarischen Ausführungsbeispiel) unter der Randbedingung erfolgen, dass der mittlere Flächenbrechwert der torischen Brillenglasrückfläche konstant bleibt, so dass sich damit die mittlere Krümmung der Brillenglasvorderfläche am Bezugspunkt des Brillenglases nicht ändert bzw. nur innerhalb gewisser Grenzen ändert.

In allen Ausführungsbeispielen der Erfindung können bei der Optimierung der Freiformfläche auf der Brillenglasvorderfläche Randbedingungen für die Pfeilhöhendifferenzen der Freiformflächenrandkurve von der Fassungsrandkurve vorgegeben werden. Derartige Randbedingungen können jedoch die optische Qualität für den Brillenträger beim Blick durch die peripheren Bereiche des an die Fassungsrandkurve angepassten Brillenglases beeinträchtigen und werden daher vorzugsweise vermieden.

Durch Messen der dreidimensionalen Fassungsrandkurve bei der Zentrierung der Fassung (bei der die Fassung ohne Korrektionsgläser vor der Bestellung des Brillenglases angepasst wird) und Berücksichtigung der gemessenen Fassungsrandkurve kann mit Hilfe des erfindungsgemäßen computerimplementierten Verfahrens die Berandung des Brillenglases, insbesondere auch der Verlauf der Facette am Rand des Brillenglases entsprechend der gemessenen Fassungsrandkurve so gestaltet werden, dass nach Einsetzen des Brillenglases in die Fassung die Fassungsform genau der während der Zentrierung der Fassung gemessenen Form entspricht, so dass die gemessenen Zentrierungsdaten gültig bleiben. Es kann dadurch verhindert werden, dass die Fassung nach dem Einsetzen des Brillenglases eine Verformung gegenüber ihrer Form bei der Zentrierung, also beim Tragen ohne Korrektionsgläser, erfährt. Gleichzeitig stimmt der Randverlauf des Brillenglases dann auch mit dem Fassungsrand beim Tragen der fertigen Brille überein. Falls die dreidimensionale Fassungsrandkurve statt durch Messung bei der Zentrierung durch eine Messung an der nicht getragenen Fassung erfasst wird, kann das erfindungsgemäße Verfahren auch mit einer leicht korrigierten dreidimensionalen Fassungsrandkurve ausgeführt werden, wobei die Korrektur die Verformung der Fassung beim Tragen berücksichtigt.

Nachfolgend wird anhand des konkreten Ausführungsbeispiels für eine Brillenfassung gezeigt, wie weit sich die Abweichung der Freiformflächenrandkurve von der Fassungsrandkurve mit dem erfindungsgemäßen Verfahren verringern lässt. Hierzu ist in Tabelle 1 die Fassungsrandkurve in kartesischen Koordinaten für Winkel zwischen 10 und 360° angegeben. Tabelle 2 zeigt für die jeweiligen Winkel die Pfeilhöhendifferenz zwischen der Freiformflächenrandkurve und der Fassungsrandkurve eines konventionellen Brillenglases, und Tabelle 3 zeigt die Pfeilhöhendifferenz zwischen der Freiformflächenrandkurve und der Fassungsrandkurve für ein Brillenglas, das mit Hilfe des erfindungsgemäßen Verfahrens an die Fassungsrandkurve der Brillenfassung angepasst worden ist.

Tabelle 1 beschreibt die Koordinaten der Fassungsrandkurve für Winkel im TABO-Schema in kartesischen Koordinaten. Die x-Koordinate und die y-Koordinate liegen dabei innerhalb der Scheibenebene der Fassung, die z-Richtung senkrecht zur Scheibenebene entgegen der Lichtrichtung. Die Winkel sind in der Tabelle in Grad, die Koordinaten x, y und z in Millimeter angegeben.

**Tabelle 1**

| Winkel | x | y | z |
|---|---|---|---|
| 10.0 | 24.5217 | 4.3238 | 0.0000 |
| 20.0 | 22.2707 | 8.1059 | 0.4125 |
| 30.0 | 18.6195 | 10.7500 | 1.2928 |
| 40.0 | 14.3250 | 12.0201 | 2.3429 |
| 50.0 | 10.2203 | 12.1801 | 3.2723 |
| 60.0 | 7.1000 | 12.2976 | 3.7943 |
| 70.0 | 4.5489 | 12.4979 | 4.0827 |
| 80.0 | 2.2053 | 12.5071 | 4.2950 |
| 90.0 | 0.0000 | 12.5000 | 4.4197 |
| 100.0 | -2.2053 | 12.5071 | 4.4659 |
| 110.0 | -4.5489 | 12.4979 | 4.4361 |
| 120.0 | -7.1000 | 12.2976 | 4.3474 |
| 130.0 | -10.4132 | 12.4099 | 4.0009 |
| 140.0 | -14.4016 | 12.0844 | 3.4516 |
| 150.0 | -19.3990 | 11.2000 | 2.4954 |
| 160.0 | -25.4657 | 9.2687 | 0.9149 |
| 170.0 | -29.0518 | 5.1226 | 0.1077 |
| 180.0 | -30.0000 | 0.0000 | 0.1875 |
| 190.0 | -29.9382 | -5.2789 | 0.3738 |
| 200.0 | -29.5063 | -10.7394 | 0.3458 |
| 210.0 | -28.0592 | -16.2000 | 0.3627 |
| 220.0 | -23.9772 | -20.1193 | 1.2717 |
| 230.0 | -18.3837 | -21.9089 | 2.5995 |
| 240.0 | -12.9500 | -22.4301 | 3.6266 |
| 250.0 | -8.1743 | -22.4587 | 4.2259 |
| 260.0 | -3.9592 | -22.4536 | 4.4618 |
| 270.0 | -0.0000 | -22.5000 | 4.4197 |
| 280.0 | 3.9418 | -22.3551 | 4.1753 |
| 290.0 | 7.7639 | -21.3310 | 3.8876 |
| 300.0 | 11.6500 | -20.1784 | 3.3648 |
| 310.0 | 15.1055 | -18.0020 | 2.8778 |
| 320.0 | 17.9254 | -15.0412 | 2.4526 |
| 330.0 | 20.3516 | -11.7500 | 1.9614 |
| 340.0 | 22.1767 | -8.0717 | 1.4930 |
| 350.0 | 24.0293 | -4.2370 | 0.7772 |
| 360.0 | 25.0000 | 0.0000 | 0.1875 |

Tabelle 2 beschreibt die Differenzrandkurve eines nach dem Stand der Technik hergestellten Brillenglases mit einer sphärischen Rückfläche, die einen Krümmungsradius von r = 167 mm aufweist. Die Brillenglasvorderfläche ist als Freiformfläche ausgebildet und für minimale astigmatische und sphärische Fehler für den Brillenträger entsprechend eines vorgegebenen optischen Zieldesigns optimiert. Bei dem der Differenzrandkurve aus Tabelle 2 zugrunde liegenden Brillenglas handelt es sich um ein optimiertes Einstärkenbrillenglas rechts mit einer Korrektionswirkung von Sph 2.0 Dioptrien, einen Brechzahl von 1,501, einer Fassungslänge von 55 mm, einer Fassungshöhe von 35 mm, einem horizontalen Zentrierpunktabstand von 25 mm, einem vertikalen Zentrierpunktabstandes von 22,5 mm, einer Vorneigung von 0° und einem Fassungsscheibenwinkel von 0°.

**Tabelle 2**

| Winkel | z-Differenz |
|---|---|
| 10.0 | 1.9452 |
| 20.0 | 1.6880 |
| 30.0 | 1.2609 |
| 40.0 | 0.8141 |
| 50.0 | 0.4596 |
| 60.0 | 0.2617 |
| 70.0 | 0.1473 |
| 80.0 | 0.0676 |
| 90.0 | 0.0201 |
| 100.0 | 0.0000 |
| 110.0 | 0.0073 |
| 120.0 | 0.0423 |
| 130.0 | 0.1589 |
| 140.0 | 0.3676 |
| 150.0 | 0.7550 |
| 160.0 | 1.4373 |
| 170.0 | 1.8792 |
| 180.0 | 1.9387 |
| 190.0 | 1.9027 |
| 200.0 | 1.8978 |
| 210.0 | 1.8139 |
| 220.0 | 1.3416 |
| 230.0 | 0.7487 |
| 240.0 | 0.3265 |
| 250.0 | 0.0943 |
| 260.0 | 0.0052 |
| 270.0 | 0.0201 |
| 280.0 | 0.1180 |
| 290.0 | 0.2617 |
| 300.0 | 0.4983 |
| 310.0 | 0.7479 |
| 320.0 | 0.9808 |
| 330.0 | 1.2263 |
| 340.0 | 1.4438 |
| 350.0 | 1.7327 |
| 360.0 | 1.9387 |

Wie der Tabelle 2 zu entnehmen ist, liegen die Pfeilhöhendifferenzen (z-Differenz), die in dem Koordinatensystem aus Tabelle 1 der Differenz der z-Koordinaten entsprechen, zwischen einer Minimalabweichung von 0 bei 100° und einer Maximalabweichung von nahezu 1,95 bei 10°. Dies bedeutet, dass der Rand der Brillenglasvorderfläche um bis zu ca. 1,9 mm über den Fassungsrand hinausragt. Die euklidische Norm der in Tabelle 2 angegebenen Differenzrandkurve hat den Wert 6,67.

Tabelle 3 zeigt die Pfeilhöhen der Differenzrandkurve eines mit Hilfe des erfindungsgemäßen Verfahrens an die Brillenfassung angepassten Brillenglases. In diesem ist die sphärische Brillenglasrückfläche durch eine torische Brillenglasrückfläche ersetzt. Mit Hilfe der erfindungsgemäßen Optimierung wurde eine torische Brillenglasrückfläche ermittelt, deren Achslage den Wert 90,9° (TABO) aufweist und deren Radius innerhalb des mit der Achslage übereinstimmenden ersten Hauptschnittes 135,772 mm und in einem senkrecht zu diesem ersten Hauptschnitt verlaufenden zweiten Hauptschnitt 91,09 mm beträgt. Die Freiformfläche auf der Brillenglasvorderfläche wurde im Rahmen der beschriebenen Iteration nach jedem Verändern der torischen Brillenglasrückfläche optimiert.

**Tabelle 3**

| Winkel | z-Differenz |
|---|---|
| 10.0 | 0.0451 |
| 20.0 | 0.0631 |
| 30.0 | 0.0682 |
| 40.0 | 0.0556 |
| 50.0 | 0.0337 |
| 60.0 | 0.0212 |
| 70.0 | 0.0155 |
| 80.0 | 0.0097 |
| 90.0 | 0.0062 |
| 100.0 | 0.0048 |
| 110.0 | 0.0054 |
| 120.0 | 0.0057 |
| 130.0 | 0.0166 |
| 140.0 | 0.0290 |
| 150.0 | 0.0483 |
| 160.0 | 0.0797 |
| 170.0 | 0.0643 |
| 180.0 | 0.0237 |
| 190.0 | 0.0051 |
| 200.0 | 0.0218 |
| 210.0 | 0.0674 |
| 220.0 | 0.0790 |
| 230.0 | 0.0542 |
| 240.0 | 0.0251 |
| 250.0 | 0.0053 |
| 260.0 | 0.0000 |
| 270.0 | 0.0062 |
| 280.0 | 0.0179 |
| 290.0 | 0.0202 |
| 300.0 | 0.0295 |
| 310.0 | 0.0271 |
| 320.0 | 0.0175 |
| 330.0 | 0.0094 |
| 340.0 | 0.0027 |
| 350.0 | 0.0092 |
| 360.0 | 0.0237 |

Wie Tabelle 3 zu entnehmen ist, weist die maximale Pfeilhöhe (z-Differenz) der Differenzrandkurve einen Wert von knapp 0,08 bei 160° auf. Mit anderen Worten, der Rand des Brillenglases steht an keiner Stelle der Fassung um mehr als 0,08 mm über den Fassungsrand vor. Die euklidische Norm der Differenzrandkurve aus Tabelle 3 besitzt den Wert 0,22. Dieser ist damit um mehr eine Größenordnung kleiner als der Wert der euklidischen Norm der Differenzrandkurve aus Tabelle 2. Der Randverlauf des Brillenglases lässt sich somit kaum noch vom Randverlauf der Fassung unterscheiden.

Die optische Qualität des gemäß dem erfindungsgemäßen Verfahren optimierten Brillenglases aus Tabelle 3 unterscheidet sich nicht wesentlich von der optischen Qualität des der Tabelle 2 zugrunde liegenden Brillenglases.

Das erfindungsgemäße Verfahren kann mit Hilfe eines entsprechenden Computerprogramms auf einem Computer ausgeführt werden. Ein solches Computerprogramm umfasst Instruktionen, die, wenn sie auf einem Computer ausgeführt werden, den Computer dazu veranlassen, das erfindungsgemäße Verfahren auszuführen. Es kann auf einem nicht flüchtigen computerlesbaren Speichermedium wie etwa einer Diskette, einer CD, einer DVD, einem USB-Stick, etc. gespeichert sein oder aus einem Netzwerk, etwa dem Internet oder einem Local Area Network (LAN) abrufbar sein.

Statt auf einem Computer kann das erfindungsgemäße Verfahren auch auf einem speziell hierzu ausgestalteten Datenverarbeitungssystem implementiert sein. Auch hierzu kann ein entsprechend ausgestaltetes Computerprogramm Verwendung finden.

Die vorliegende Erfindung wurde anhand von exemplarischen Ausführungsbeispielen zu Erläuterungszwecken im Detail beschrieben. Ein Fachmann erkennt jedoch, dass im Rahmen der vorliegenden Erfindung von den beschriebenen exemplarischen Ausführungsbeispielen abgewichen werden kann. Beispielsweise könne in alternativen Ausführungsformen die Freiformfläche auf der Brillenglasrückfläche und die torische Fläche auf der Brillenglasvorderfläche gebildet werden. Ebenso besteht die Möglichkeit, statt einer torischen Fläche eine atorische Fläche, eine sphärische Fläche oder eine asphärische Fläche zu verwenden. Die vorliegende Erfindung soll daher nicht durch die exemplarischen Ausführungsbeispiele beschränkt sein, sondern lediglich durch die beigefügten Ansprüche.

### Bezugszeichenliste

- S1: Vorgabe einer mittleren Krümmung
- S2: Bestimmen der Brillenglasrückfläche
- S3: Optimieren einer Freiformfläche auf der Brillenglasvorderfläche
- S4: Ermitteln der Differenzrandkurve
- S5: Überprüfen ob die Pfeilhöhendifferenzen einen vorgegebenen Grenzwert unterschreiten
- S6: Ausgeben der Daten des angepassten Brillenglases
- S7: Überprüfen, ob die Verbesserung einen vorgegebenen Grenzwert unterschreitet
- S8: Anpassen eines Torus an die Differenzrandkurve
- S9: Überlagern des in S8 angepassten Torus der zuvor bestimmten torischen Brillenglasrückfläche
- S11: Vorgabe einer mittleren Krümmung für die Brillenglasvorderfläche
- S12: Berechnen einer torischen Brillenglasrückfläche
- S13: Optimieren einer Freiformfläche auf der Brillenglasvorderfläche
- S14: Berechnen der Norm der Differenzrandkurve
- S15: Überprüfen, ob die Norm der Differenzrandkurve einen Grenzwert unterschreitet
- S16: Ausgeben der Daten des angepassten Brillenglases
- S17: Überprüfen, ob die Verbesserung der Norm einen vorgegebenen Grenzwert unterschreitet
- S18: Variation der Parameter der Brillenglasrückfläche

## Patentansprüche

1. Computerimplementiertes Verfahren zum Anpassen eines Brillenglases mit einer ersten Brillenglasfläche, einer zweiten Brillenglasfläche und wenigstens einer zu erzielenden dioptrischen Wirkung an eine Brillenfassung mit einer bestimmten Fassungsrandkurve, in dem eine auf einer ersten Brillenglasfläche gebildete Freiformfläche an die Fassungsrandkurve der Brillenfassung angepasst wird,
**dadurch gekennzeichnet, dass**
das Anpassen der Freiformfläche an die Fassungsrandkurve erfolgt, indem gleichzeitig die Freiformfläche und die zweite Brillenglasfläche im Hinblick auf eine Minimierung des Unterschiedes zwischen der Freiformflächenrandkurve und der Fassungsrandkurve sowie im Hinblick auf das Erreichen der wenigstens einen mit dem Brillenglas zu erzielenden dioptrischen Wirkung optimiert werden.

2. Computerimplementiertes Verfahren nach Anspruch 1, **dadurch gekennzeichnet, dass** die zweite Brillenglasfläche eine sphärische Brillenglasfläche, eine asphärische Brillenglasfläche, eine torische Brillenglasfläche oder eine atorische Brillenglasfläche ist.

3. Computerimplementiertes Verfahren nach Anspruch 1 oder Anspruch 2, **dadurch gekennzeichnet, dass** das gleichzeitige Optimieren der Freiformfläche und der zweiten Brillenglasfläche iterativ erfolgt, wobei in jedem Iterationsschritt zuerst die zweite Brillenglasfläche verändert wird und dann die Freiformfläche im Hinblick auf das Erreichen der wenigstens einen mit dem Brillenglas zu erzielenden dioptrischen Wirkung optimiert wird.

4. Computerimplementiertes Verfahren nach Anspruch 3, **dadurch gekennzeichnet, dass** als Ausgangspunkt für die iterative Optimierung ein Ausgangsbrillenglas mit einer eine vorgegebene Krümmung aufweisenden ersten Brillenglasfläche dient.

5. Computerimplementiertes Verfahren nach Anspruch 4, **dadurch gekennzeichnet, dass** im ersten Iterationsschritt zuerst die zweite Brillenglasfläche im Hinblick auf die wenigstens eine mit dem Brillenglas zu erzielende dioptrische Wirkung bestimmt wird und dann die Freiformfläche im Hinblick auf das Erreichen der wenigstens einen mit dem Brillenglas zu erzielenden dioptrischen Wirkung optimiert wird.

6. Computerimplementiertes Verfahren nach einem der Ansprüche 3 bis 5, **dadurch gekennzeichnet, dass** in jedem Iterationsschritt nach dem Optimieren der Freiformfläche ein Maß für die Abweichung der nach der Optimierung der Freiformfläche vorliegenden Freiformflächenrandkurve von der Fassungsrandkurve ermittelt wird und das Verfahren beendet wird, falls das Maß für die Abweichung einen vorgegebenen Wert unterschreitet oder die Änderung des Maßes einen vorgegebenen Wert unterschreitet, oder andernfalls in einem nachfolgenden Iterationsschritt
- die zweite Brillenglasfläche verändert wird und
- anschließend die Freiformfläche erneut im Hinblick auf das Erreichen der wenigstens einen mit dem Brillenglas zu erzielenden dioptrischen Wirkung optimiert wird.

7. Computerimplementiertes Verfahren nach Anspruch 6, **dadurch gekennzeichnet, dass**
- das Maß für die Abweichung auf einer die Differenz der Pfeilhöhen der Freiformflächenrandkurve und der Fassungsrandkurve an einander äquivalenten Punkten der beiden Randkurven relativ zu einer Bezugsebene repräsentierenden Differenzrandkurve basiert und
- das Verändern der zweiten Brillenglasfläche auf der Basis der Differenzrandkurve erfolgt.

8. Computerimplementiertes Verfahren nach Anspruch 7, **dadurch gekennzeichnet, dass** das Verändern der zweiten Brillenglasfläche erfolgt, indem eine dritte Brillenglasfläche an die Differenzrandkurve angepasst wird und zumindest ein Abschnitt der dritten Brillenglasfläche der zweiten Brillenglasfläche überlagert wird.

9. Computerimplementiertes Verfahren nach einem der Ansprüche 3 bis 5, **dadurch gekennzeichnet, dass** das Verändern der zweiten Brillenglasfläche mit Hilfe eines Variationsverfahrens erfolgt.

10. Computerimplementiertes Verfahren nach einem der Ansprüche 3 bis 9, **dadurch gekennzeichnet, dass** beim Verändern der zweiten Brillenglasfläche der mittlere Flächenbrechwert der zweiten Brillenglasfläche konstant bleibt.

11. Computerimplementiertes Verfahren nach einem der Ansprüche 1 bis 10, **dadurch gekennzeichnet, dass** die erste Brillenglasfläche die Brillenglasvorderfläche und die zweite Brillenglasfläche die Brillenglasrückfläche ist.

12. Computerprogramm zum Anpassen eines Brillenglases mit einer ersten Brillenglasfläche, einer zweiten Brillenglasfläche und wenigstens einer zu erzielenden dioptrischen Wirkung an eine Brillenfassung mit einer bestimmten Fassungsrandkurve, umfassend Instruktionen, die, wenn sie auf einem Computer ausgeführt werden, den Computer dazu veranlassen, eine auf einer ersten Brillenglasfläche gebildete Freiformfläche an die Fassungsrandkurve der Brillenfassung anzupassen, **dadurch gekennzeichnet, dass** das Computerprogramm außerdem Instruktionen umfasst, die, wenn sie auf einem Computer ausgeführt werden, den Computer dazu veranlassen, zum Anpassen der Freiformfläche an die Fassungsrandkurve gleichzeitig die Freiformfläche und die zweite Brillenglasfläche im Hinblick auf eine Minimierung des Unterschiedes zwischen der Freiformflächenrandkurve und der Fassungsrandkurve sowie im Hinblick auf das Erreichen der wenigstens einen mit dem Brillenglas zu erzielenden dioptrischen Wirkung zu optimieren.

13. Datenverarbeitungssystem zum Anpassen eines Brillenglases mit einer ersten Brillenglasfläche, einer zweiten Brillenglasfläche und wenigstens einer zu erzielenden dioptrischen Wirkung an eine Brillenfassung mit einer bestimmten Fassungsrandkurve, wobei das Datenverarbeitungssystem einen Prozessor und wenigstens einen Speicher umfasst und der Prozessor dazu ausgestaltet ist, basierend auf Instruktionen eines im Speicher gespeicherten Computerprogramms eine auf einer ersten Brillenglasfläche gebildete Freiformfläche an die Fassungsrandkurve der Brillenfassung anzupassen, **dadurch gekennzeichnet, dass** der Prozessor außerdem dazu ausgestaltet ist, basierend auf den Instruktionen des im Speicher gespeicherten Computerprogramms zum Anpassen der Freiformfläche an die Fassungsrandkurve gleichzeitig die Freiformfläche und die zweite Brillenglasfläche im Hinblick auf eine Minimierung des Unterschiedes zwischen der Freiformflächenrandkurve und der Fassungsrandkurve sowie im Hinblick auf das Erreichen der wenigstens einen mit dem Brillenglas zu erzielenden dioptrischen Wirkung zu optimieren.

14. Nichtflüchtiges computerlesbares Speichermedium mit darauf gespeicherten Instruktionen zum Anpassen eines Brillenglases mit einer ersten Brillenglasfläche, einer zweiten Brillenglasfläche und wenigstens einer zu erzielenden dioptrischen Wirkung an eine Brillenfassung mit einer bestimmten Fassungsrandkurve, wobei die Instruktionen, wenn sie auf einem Computer ausgeführt werden, den Computer dazu veranlassen, eine auf einer ersten Brillenglasfläche gebildete Freiformfläche an die Fassungsrandkurve der Brillenfassung anzupassen, **dadurch gekennzeichnet, dass** das Speichermedium außerdem darauf gespeicherte Instruktionen umfasst, die, wenn sie auf einem Computer ausgeführt werden, den Computer dazu veranlassen, zum Anpassen der Freiformfläche an die Fassungsrandkurve gleichzeitig die Freiformfläche und die zweite Brillenglasfläche im Hinblick auf eine Minimierung des Unterschiedes zwischen der Freiformflächenrandkurve und der Fassungsrandkurve sowie im Hinblick auf das Erreichen der wenigstens einen mit dem Brillenglas zu erzielenden dioptrischen Wirkung zu optimieren.
